# EUROPÄISCHE PATENTSCHRIFT

(11) **EP 1 384 534 B1**
(45) Veröffentlichungstag und Bekanntmachung des Hinweises auf die Patenterteilung: **19.01.2005**
(21) Anmeldenummer: 03009581.4
(22) Anmeldetag: 29.04.2003
(51) Int. Cl.: B21D 26/02, B21C 37/15

(54) **Vorrichtung zur abschnittsweisen Autofrettage von Rohren**
Apparatus for sectional autofrettage of tubes
Dispositif d'autofrettage de tubes par sections

(30) Priorität: 26.07.2002 DE 10234029
(43) Veröffentlichungstag der Anmeldung: 28.01.2004
(73) Patentinhaber: Rheinmetall Waffe Munition GmbH, 84544 Aschau am Inn (DE)
(72) Erfinder: Wagner, Hartmut, 37308 Günterode (DE); Breuer, Heinz Günter, 47249 Duisburg (DE); Hülsewis, Hans, 47259 Duisburg (DE); Baumann, Berthold, 29348 Eschede (DE)
(74) Vertreter: Dietrich, Barbara, Dipl.-Ing.

(56) Entgegenhaltungen:
- DE-B- 1 124 987
- US-A- 1 391 009
- US-A- 1 495 587

## Beschreibung

Die Erfindung betrifft eine Vorrichtung zur abschnittsweisen Autofrettage von Rohren, insbesondere Waffenrohren, mittels eines im Rohrinneren erzeugten hydraulischen Innendrucke, gemäß dem Oberbegriff des Anspruchs 1 (siehe z. B. US-A-1 391 009).

Waffenrohre werden beim Schuß durch sehr hohe Gasdrücke belastet, die eine Aufweitung des Waffenrohres und damit eine Dehnung der Rohrinnenfläche bewirken. Zur Erhöhung der Widerstandsfähigkeit gegen die Rohrdehnung beim Schuß ist es bekannt, das entsprechende Waffenrohr einer Autofrettage zu unterziehen. Dabei wird durch Druckbeaufschlagung der inneren Oberfläche des Waffenrohres die Elastizitätsgrenze der Festigkeit der inneren Schichten überschritten, so daß eine bleibende Deformation durch Dehnung dieser Schichten hervorgerufen wird, die sich an die äußeren Schichten andrücken. Die bleibende Deformation erfährt beim Schießen dann keine weiteren Veränderungen mehr, da der während des Autofrettageverfahrens erzielte hohe Druck nicht wieder erreicht wird.

Aus der DE-PS 1 124 987 ist ein Verfahren zur Autofrettage von Waffenrohren bekannt, bei dem im Rohrinneren ein hydraulischer Innendruck erzeugt wird, der mit zunehmender Entfernung vom ladungsseitigen Rohrende ständig abnimmt und somit den Druckverlauf der Treibladungsgase beim Schuß im Waffenrohr berücksichtigt. Hierzu wird der zwischen der Innenwand des Waffenrohres und einem dornenförmigen Metalleinsatz bestehende Ringspalt kontinuierlich von einer unter hohem Druck stehenden hochviskosen Flüssigkeit durchflossen, wobei durch die Weite des Ringspaltes die örtliche Druckbelastung eingestellt wird.

Aus der DE-PS 1 124 987 ist ferner bekannt, daß eine abschnittsweise Autofrettage bisher nicht in befriedigender Weise durchgeführt werden konnte, weil die hierzu erforderlichen Abdichteinrichtungen zwischen den verschiedenen Längenabschnitten nicht zur Verfügung standen.

Der Erfindung liegt die Aufgabe zugrunde, eine Vorrichtung der eingangs erwähnten Art zur Durchführung einer abschnittsweisen Autofrettage anzugeben.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, an dem Ende des domenförmigen Metalleinsatzes eine erste Abdichteinrichtung anzuordnen, die ein auf einem Dichtsitz des Einsatzes angeordnetes Dichtpaket aufweist, wobei der Dichtsitz vorderseitig durch eine Haltevorrichtung begrenzt ist, die eine auf den Einsatz aufschraubbare Gewindehülse und ein sich an die Gewindehülse eckseitig anschließendes ringförmiges Zwischenteil umfaßt. Das Dichtpaket umfaßt mindestens einen durch eine Schulter des dornenförmigen Metalleinsatzes gehaltenen O-Ring, einen Lederring, einen Stützring und eine aus zwei Teilringen bestehende Hochdruckdichtung, wobei die Teilringe konische Berührungsflächen besitzen, derart, daß bei Druckbeaufschlagung der Hochdruckdichtung einer der beiden Teilringe über die konische Berührungsfläche nach außen gegen die Innenwand des Rohres und einer der beiden Teilringe über die konische Berührungsfläche nach innen gegen den Metalleinsatz gepreßt wird, was eine Abdichtung bei extrem hohen Drücken bewirkt.

Als besonders vorteilhaft hat es sich erwiesen, wenn das Dichtpaket einen durch die Schulter des Einsatzes gehaltenen elastischen O-Ring und einen sich an dem O-Ring und dem Stützring abstützenden, aus Leder bestehenden Ring umfaßt. In diesem Fall übernimmt der vorzugsweise aus Gummi bestehende O-Ring die Abdichtung im unteren Druckbereich. Der z.B. aus handelsüblichen Rindsleder bestehende Lederring verhindert hingegen ein Extrudieren des O-Ringes bei höheren Drücken in den Spalt des nachfolgenden Stützringes. Die aus den beiden Teilringen bestehende Hochdruckdichtung übernimmt dann im wesentlichen nur die Abdichtung bei hohen Drücken.

Als zweckmäßig hat es sich erwiesen, wenn in die Gewindehülse der Haltevorrichtung auf der dem Dichtpaket abgewandten Seite ein Schraubbolzen eingesetzt ist, wobei das Gewinde der Gewindehülse in diesem Bereich entgegengesetzt gerichtet ist zu dem restlichen Gewinde, so daß durch Drehung des Gewindebolzens die Gewindehülse vom Dichtpaket weg drehbar ist. Dadurch kann bei einem Verklemmen des Dichtpaketes dieses von dem Rohrausgang (z.B. der Mündung des Waffenrohres) aus wieder auf einfache Weise gelöst werden.

Um auch längere domenformige Metalleinsätze problemlos in das jeweilige Rohr einführen zu können, hat es sich ferner als vorteilhaft erwiesen, wenn der dornenförmige Metalleinsatz mit voneinander beabstandeten ringförmigen, sich von der Oberfläche in das Innere des Einsatzes erstreckenden Vertiefungen versehen ist. Dadurch kann der Einsatz dem Verlauf des Waffenrohres bei seinem Einschieben problemlos folgen.

Weitere Einzelheiten und Vorteile der Erfindung ergeben sich aus den folgenden anhand von Figuren erläuterten Ausführungsbeispielen. Es zeigen:
Fig.1 den Längsschnitt des vorderen Bereiches einer erfindungsgemäßen Vorrichtung zur Autofrettage eines Waffenrohres mit einer Abdichteinrichtung;
Fig.2 bis 4 ein Waffenrohr, bei dem drei Abschnitte nacheinander mit unterschiedlichen erfindungsgemäßen Vorrichtungen autofrettiert werden.

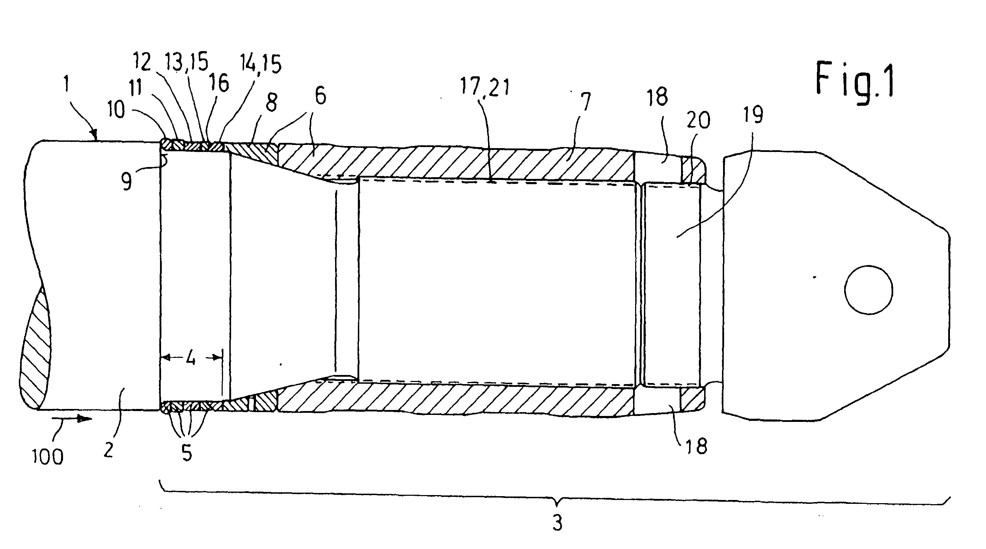

In Fig.1 ist mit 1 eine erfindungsgemäße Vorrichtung bezeichnet, die einen dornenförmigen Metalleinsatz 2 umfaßt, welcher mit einer ersten Abdichteinrichtung 3 für den Kaliberbereich eines Waffenrohres verbunden ist.

Die erste Abdichteinrichtung 3 weist einen auf einem Dichtsitz 4 am Metalleinsatz 2 angeordnetes Dichtpaket 5 auf, wobei der Dichtsitz 4 vorderseitig durch eine Haltevorrichtung 6 begrenzt ist, die eine auf den Metalleinsatz 2 aufschraubbare Gewindehülse 7 und ein sich an die Gewindehülse 7 heckseitig anschließendes ringförmiges Zwischenteil 8 umfaßt.

Das Dichtpaket 5 umfaßt einen durch eine Schulter 9 des Metalleinsatzes 2 gehaltenen O-Ring 10 aus Gummi, einen sich daran anschließenden Lederring 11, einen Stützring 12 und einer aus zwei Teilringen 13, 14 bestehenden Hochdruckdichtung 15 mit konischen Berührungsflächen 16. Dabei bestehen der Stützring 12 und die beiden Teilringe 13, 14 aus Stahl.

Bei einem Druckaufbau in dem entsprechenden Abschnitt des Waffenrohres wird von der Druckseite 100 her zunächst der O-Ring 10 beaufschlagt und übernimmt die Abdichtung im unteren Druckbereich. Bei Erhöhung des Druckes verhindert dann der Lederring 11 ein Extrudieren des O-Ringes 10 in den zwischen dem Stützring 12 und der inneren Oberfläche des Waffenrohres vorhandenen Spalt. Außerdem drückt der Stützring 12 auf den ersten Teilring 13, der bei Zunahme des Druckes über die konische Berührungsfläche 16 auf den zweiten Teilring 14 aufgeschoben wird. Dadurch wird eine radiale Aufweitung und eine Verpressung dieses Teilringes 13 gegen die Rohrinnenwand und eine radiale Zusammendrückung und eine Verpressung des Teilringes 14 gegen den Metalleinsatz 2 und damit eine Abdichtung gegen extreme hohe Drücke bewirkt.

Zum Aufschrauben der Gewindehülse 7 der Haltevorrichtung 6 auf das entsprechende Gewinde 17 der Vorrichtung 1 sind Bohrungen 18 vorgesehen, durch welche ein knebelartiger Stift (nicht dargestellt) steckbar ist, der dann zum Einstellen des ersten Dichtpaketes 5 manuell gedreht wird.

Außerdem ist in die Gewindehülse 7 auf der dem Dichtpaket 5 abgewandten Seite ein Schraubbolzen 19 eingesetzt, wobei die Gewindehülse 7 in diesem Bereich ein Gewinde 20 aufweist, welches entgegengesetzt gerichtet ist zu dem Gewinde 21, welches in das Gewinde 17 der Vorrichtung 1 eingreift, so daß durch Drehung des Schraubbolzens 19 die Gewindehülse 7 vom Dichtpaket 5 weg drehbar ist. Dadurch kann bei einem Verklemmen des Dichtpaketes 5 dieser von der Mündung des Waffenrohres aus wieder auf einfache Weise gelöst werden.

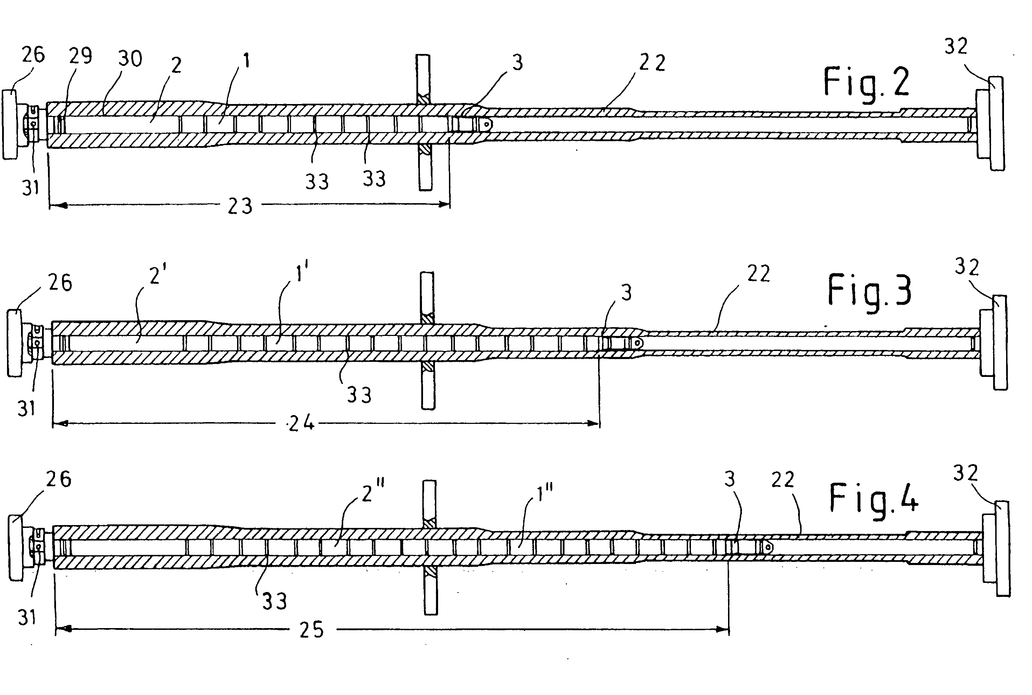

In den Fig.2-4 ist mit 22 ein Waffenrohr eines Panzers bezeichnet, welches entsprechend der Gasdruckbelastung beim Schuß einen sich stufenförmig verringernden Außendurchmesser entlang des Waffenrohres besitzt.

Zur optimalen Materialausnutzung wird das Waffenrohr 22 über eine variable Länge hydraulisch autofrettiert, wobei es hier im Beispiel in drei unterschiedlich zu autofrettierende Rohrbereiche 23-25 unterteilt ist (Fig.2-4). Dabei sind die Autofrettierdrücke p1, p2 und p3 für die einzelnen Rohrbereiche 23-25 entsprechend den Abmessungen des Waffenrohres 22 so festzulegen, daß gilt p1 > p2 > p3. Zur Durchführung der Autofrettage befindet sich das Waffenrohr in einer nur schematisch angedeuteten Rohraufnahmeeinrichtung 32. Eine Unterteilung in mehr oder weniger Autofrettageabschnitte ist denkbar.

Die Autofrettage der Rohrbereiche 23-25 erfolgt nacheinander. Hierzu wird für jeden einzelnen Autofrettageabschnitt eine separate erfmdungsgemäße Vorrichtung 1, 1' und 1" benötigt. Diese besteht jeweils aus einem in einer Aufnahmeeinrichtung 26 befindlichen Metalleinsatz 2, 2' und 2" mit jeweils einer im Kaliberbereich 27 des Waffenrohres 22 anzuordnenden ersten Abdichteinrichtung 3 und einer entsprechend aufgebauten, im Ladungsraumbereich 28 des Waffenrohres 22 anzuordnenden zweiten Abdichteinrichtung 29.

Um möglichst wenig Ölvolumen zu benötigen, weisen die Metalleinsätze 2, 2' und 2" einen Außendurchmesser auf, welcher dem Innendurchmesser des Waffenrohres 22 nahe kommt. Im Ladungsraumbereich wird überdies ein zusätzliches Füllstück 30 hierfür eingesetzt.

Die Ölzufuhr erfolgt von der jeweiligen die Vorrichtung 1, 1' und 1" aufnehmenden Aufnahmeeinrichtung 26 her über Bohrungen 31 im Metalleinsatz 2, 2' und 2"

Wie aus Fig.2 entnehmbar, wird zunächst die Vorrichtung 1 in das Waffenrohr 22 eingebracht, an die Ölzufuhr angeschlossen und dann das Waffenrohr 22 in diesem Rohrbereich mit dem Druck p1 belastet.

Nach Beendigung der Autofrettage in dem Rohrbereich 23 wird die Vorrichtung 1 dem Waffenrohr 22 entnommen und nachfolgend die Vorrichtung 1' in den Rohrbereich 24 eingebracht (Fig.3). Nun wird in diesem Rohrbereich Öl eingebracht, das Waffenrohr 22 mit einem Druck p2 belastet und die Vorrichtung 1' dem Waffenrohr 22 wieder entnommen.

Anschließend erfolgt dann die Autofrettage in dem Rohrbereich 25 (Fig.4) durch Einbringen der Vorrichtung 1" in das Waffenrohr 22 und entsprechender Druckbeaufschlagung des Waffenrohres 22 mit einem Öldruck p3.

Wie den Fig.2-4 überdies zu entnehmen ist, weisen die dornenförmigen Metalleinsätze 2, 2' und 2" voneinander beabstandete ringförmige, sich von der Oberfläche in das Innere der Metalleinsätze 2, 2' und 2" erstreckende Vertiefungen 33 auf, um die Metalleinsätze 2, 2', 2" problemlos in das Waffenrohr 22 einführen zu können.

### Bezugszeichenliste

- 1,1',1": Vorrichtung
- 2,2',2": Metalleinsatz, Einsatz
- 3: erste Abdichteinrichtung
- 4: Dichtsitz
- 5: Dichtpaket
- 6: Haltevorrichtung
- 7: Gewindehülse
- 8: Zwischenteil
- 9: Schulter
- 10: O-Ring
- 11: Lederring
- 12: Stützring
- 13: erste Teilring
- 14: zweite Teilring
- 15: Hochdruckdichtung
- 16: Berührungsfläche
- 17: Gewinde
- 18: Bohrung
- 19: Schraubbolzen
- 20: Gewinde
- 21: Gewinde
- 22: Rohr, Waffenrohr
- 23-25: Rohrbereiche
- 26: Aunahmeeinrichtung
- 27: Kaliberbereich
- 28: Ladungsraumbereich
- 29: zweite Abdichteinrichtung
- 30: Füllstück
- 31: Bohrung
- 32: Rohraufnahmeeinrichtung
- 33: Vertiefungen

- 100: Druckseite

## Patentansprüche

1. Vorrichtung zur abschnittsweisen Autofrettage von Rohren (22), insbesondere Waffenrohren, mittels eines im Rohrinneren erzeugten hydraulischen Innendruckes, mit den Merkmalen:
a) die Vorrichtung (1, 1', 1") umfaßt einen in das Rohr (22) vom Rohreingang aus einschiebbaren dornenförmigen Einsatz (2, 2', 2''), welcher mit einer ersten Abdichteinrichtung (3) verbunden ist;
**gekennzeichnet durch** die folgenden Merkmale:
b) die erste Abdichteinrichtung (3) weist einen auf einem Dichtsitz (4) des Einsatzes (2, 2', 2") angeordnetes Dichtpaket (5) auf, wobei der Dichtsitz (4) vorderseitig **durch** eine Haltevorrichtung (6) begrenzt ist, die eine auf den Einsatz (2, 2', 2") aufschraubbare Gewindehülse (7) und ein sich an die Gewindehülse (7) heckseitig anschließendes ringförmiges Zwischenteil (8) umfaßt;
c) das Dichtpaket (5) umfaßt mindestens einen **durch** eine Schulter (9) des Einsatzes (2, 2', 2") gehaltenen O-Ring (10), einen Lederring (11), einen Stützring (12) und einer aus zwei Teilringen (13, 14) bestehenden Hochdruckdichtung (15), wobei die Teilringe (13, 14) über eine konische Berührungsfläche (16) miteinander verbunden sind, derart, daß bei Druckbeaufschlagung der Hochdruckdichtung (15) einer der beiden Teilringe (13, 14) über die konische Berührungsfläche (16) nach außen gegen die Innenwand des Waffenrohres (22) und einer der beiden Teilringe (13, 14) über die konische Berührungsfläche (16) nach innen gegen den Metalleinsatz (2) gedrückt wird.

2. Vorrichtung nach Anspruch 1, **dadurch gekennzeichnet, daß** der O-Ring (10) des Dichtpaketes (5) elastisch ist und durch die Schulter (9) des Einsatzes (2, 2', 2") gehalten ist und der Lederring (11) sich an dem O-Ring (10) und dem Stützring (12) abstützt.

3. Vorrichtung nach Anspruch 1 oder 2, **dadurch gekennzeichnet, daß** in die Gewindehülse (7) der Haltevorrichtung (6) auf der dem Dichtpaket (5) abgewandten Seite ein Schraubbolzen (19) eingesetzt ist, wobei das Gewinde (20) der Gewindehülse (7) in diesem Bereich entgegengesetzt gerichtet ist zu dem restlichen Gewinde (21), so daß durch Drehung des Schraubbolzens (19) die Gewindehülse (7) vom Dichtpaket (5) weg drehbar ist.

4. Vorrichtung nach einem der Ansprüche 1 bis 3, **dadurch gekennzeichnet, daß** der O-Ring (10) aus Gummi besteht.

5. Vorrichtung nach einem der Ansprüche 1 bis 4, **dadurch gekennzeichnet, daß** die beiden Teilringe (13, 14) der Hochdruckdichtung (15) aus Stahl bestehen.

6. Vorrichtung nach einem der Ansprüche 1 bis 5, **dadurch gekennzeichnet, daß** der Lederring (11) aus Rindsleder besteht.

7. Vorrichtung nach einem der Ansprüche 1 bis 6, **dadurch gekennzeichnet, daß** der dornenförmige Einsatz (2, 2', 2") auf seiner dem Rohreingang des Rohres (22) zugewandten Seite mit einer zweiten Abdichteinrichtung (29) verbunden ist, deren Aufbau der ersten Abdichteinrichtung (3) im wesentlichen entspricht.

8. Vorrichtung nach einem der Ansprüche 1 bis 7, **dadurch gekennzeichnet, daß** der dornenförmige Einsatz (2, 2', 2") mit voneinander beabstandeten ringförmigen, sich von der Oberfläche in das Innere des Einsatzes (2, 2', 2") erstreckenden Vertiefungen (33) versehen ist.

## Claims

1. Apparatus for cold-working tubes (22), in particular gun barrels, in sections by means of an internal hydraulic pressure generated in the tube interior, having the features:
a) the apparatus (1, 1', 1") comprises a mandrel-shaped insert (2, 2', 2"), which is insertable into the tube (22) from the tube entrance and is connected to a first sealing device (3);
**characterized by** the following features:
b) the first sealing device (3) comprises a sealing pack (5) disposed on a sealing seat (4) of the insert (2, 2', 2"), wherein the sealing seat (4) is delimited at the front by a retaining apparatus (6), which comprises a threaded sleeve (7) screwable onto the insert (2, 2', 2") as well as an annular intermediate part (8) adjoining the rear of the threaded sleeve (7);
c) the sealing pack (5) comprises at least one O-ring (10) held by a shoulder (9) of the insert (2, 2', 2"), a leather ring (11), a support ring (12) and a high-pressure seal (15) comprising two partial rings (13, 14), wherein the partial rings (13, 14) are connected to one another by a conical contact surface (16), such that upon pressurization of the high-pressure seal (15) one of the two partial rings (13, 14) is pressed by the conical contact surface (16) outwards against the inner wall of the gun barrel (22) and one of the two partial rings (13, 14) is pressed by the conical contact surface (16) inwards against the metal insert (2).

2. Apparatus according to claim 1, **characterized in that** the O-ring (10) of the sealing pack (5) is elastic and is held by the shoulder (9) of the insert (2, 2', 2") and the leather ring (11) is supported against the O-ring (10) and the support ring (12).

3. Apparatus according to claim 1 or 2, **characterized in that** a threaded bolt (19) is inserted into the threaded sleeve (7) of the retaining apparatus (6) at the end remote from the sealing pack (5), wherein the thread (20) of the threaded sleeve (7) in this region extends in the opposite direction to the remaining thread (21), so that by rotating the threaded bolt (19) the threaded sleeve (7) is rotatable away from the sealing pack (5).

4. Apparatus according to one of claims 1 to 3, **characterized in that** the O-ring (10) is made of rubber.

5. Apparatus according to one of claims 1 to 4, **characterized in that** the two partial rings (13, 14) of the high-pressure seal (15) are made of steel.

6. Apparatus according to one of claims 1 to 5, **characterized in that** the leather ring (11) is made of cowhide leather.

7. Apparatus according to one of claims 1 to 6, **characterized in that** the mandrel-shaped insert (2, 2', 2") at its side facing the tube entrance of the tube (22) is connected to a second sealing device (29), the design of which corresponds substantially to the first sealing device (3).

8. Apparatus according to one of claims 1 to 7, **characterized in that** the mandrel-shaped insert (2, 2', 2") is provided with mutually spaced annular indentations (33), which extend from the surface into the interior of the insert (2, 2', 2").

## Revendications

1. Dispositif pour l'auto-frettage par sections de tubes (22), en particulier de tubes d'armes, au moyen d'une pression hydraulique interne produite à l'intérieur du tube, présentant les caractéristiques suivantes :
a) le dispositif (1, 1', 1") comprend un insert (2, 2', 2") en forme de mandrin pouvant être introduit dans le tube (22) depuis son entrée, lequel insert est relié à un premier dispositif d'étanchéité (3) ; **caractérisé par** les caractéristiques suivantes :
b) le premier dispositif d'étanchéité (3) comporte un paquet d'étanchéité (5) disposé sur un siège d'étanchéité (4) de l'insert (2, 2', 2"), le siège d'étanchéité (4) étant limité à l'avant par un dispositif de retenue (6) qui comprend une douille taraudée (7) pouvant être vissée sur l'insert (2, 2', 2") et une pièce intermédiaire (8) en forme d'anneau se raccordant à l'arrière à la douille taraudée (7) ;
c) le paquet d'étanchéité (5) comprend au moins un joint torique (10) maintenu par un épaulement (9) de l'insert (2, 2', 2"), un anneau en cuir (11), un anneau d'appui (12) et une garniture d'étanchéité haute pression (15) constituée de deux parties annulaires (13, 14), les parties annulaires (13, 14) étant reliées entre elles par une surface de contact (16) conique de manière que sous l'action de la pression sur la garniture d'étanchéité haute pression (15), l'une des deux parties annulaires (13, 14) est pressée, par l'intermédiaire de la surface de contact (16) conique, vers l'extérieur, contre la paroi intérieure du tube (22) et l'une des deux parties annulaires (13, 14) est pressée, par l'intermédiaire de la surface de contact (16) conique, vers l'intérieur, contre l'insert métallique (2).

2. Dispositif selon la revendication 1, **caractérisé en ce que** le joint torique (10) du paquet d'étanchéité (5) est élastique et maintenu par l'épaulement (9) de l'insert (2, 2', 2"), et l'anneau en cuir (11) prend appui contre le joint torique (10) et l'anneau d'appui (12).

3. Dispositif selon la revendication 1 ou 2, **caractérisé en ce que** dans la douille taraudée (7) du dispositif de retenue (6), une tige filetée (19) est insérée sur le côté tourné à l'opposé du paquet d'étanchéité (5), le taraudage (20) de la douille taraudée (7) étant de sens opposé, dans cette zone, au reste du filetage (21), de sorte que par rotation de la tige filetée (19), la douille taraudée (7) peut être dévissée du paquet d'étanchéité (5).

4. Dispositif selon l'une des revendications 1 à 3, **caractérisé en ce que** le joint torique (10) est en caoutchouc.

5. Dispositif selon l'une des revendications 1 à 4, **caractérisé en ce que** les deux parties annulaires (13, 14) de la garniture d'étanchéité haute pression (15) sont en acier.

6. Dispositif selon l'une des revendications 1 à 5, **caractérisé en ce que** l'anneau en cuir (11) est en cuir de boeuf.

7. Dispositif selon l'une des revendications 1 à 6, **caractérisé en ce que** l'insert (2, 2', 2") en forme de mandrin est relié, sur son côté tourné vers l'entrée du tube (22), d'un deuxième dispositif d'étanchéité (29) dont la réalisation correspond sensiblement à celle du premier dispositif d'étanchéité (3).

8. Dispositif selon l'une des revendications 1 à 7, **caractérisé en ce que** l'insert (2, 2', 2") en forme de mandrin est pourvu de renfoncements (33) en forme d'anneau, écartés les uns des autres, s'étendant depuis la surface à l'intérieur de l'insert (2, 2', 2").
